(19) **Europäisches Patentamt / European Patent Office / Office européen des brevets**

(11) **EP 4 332 911 A1**

(12) # EUROPEAN PATENT APPLICATION

(43) Date of publication:
06.03.2024 Bulletin 2024/10

(21) Application number: 23170916.3

(22) Date of filing: 01.05.2023

(51) International Patent Classification (IPC):
*G06V 20/54* (2022.01)    *G06V 20/52* (2022.01)

(52) Cooperative Patent Classification (CPC):
G06F 17/12; G06V 20/52; G06V 20/54;
H04N 23/61; H04N 23/69; H04N 23/695;
H04N 23/80

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.05.2022 IN 202211027975**

(71) Applicant: **Honeywell International Inc.**
**Charlotte, NC 28202 (US)**

(72) Inventors:
• **BHATTACHARJEE, Arnab**
**Charlotte, 28202 (US)**
• **KANNAIYAN, Karthikeyan**
**Charlotte, 28202 (US)**
• **DHAYALAN, Sivasanthanam**
**Charlotte, 28202 (US)**

(74) Representative: **Haseltine Lake Kempner LLP**
**Cheapside House**
**138 Cheapside**
**London EC2V 6BJ (GB)**

(54) **AUTOMATIC CONFIGURATION OF CAMERA SETTINGS USING RADAR**

(57)    A system includes a camera having a field of view, a radar sensor having a field of view that at least partially overlaps the field of view of the camera, and a controller operatively coupled to the camera and the radar sensor. The controller is configured to receive one or more signals from the radar sensor, identify an object of interest moving toward the camera based at least in part on the one or more signals from the radar sensor, determine a speed of travel of the object of interest, determine a projected track of the object of interest, and determine a projected image capture window within the field of view of the camera at which the object of interest is projected to arrive. The controller may then send one or more camera setting commands to the camera.

FIG. 1

EP 4 332 911 A1

**Description**

Technical Field

The present disclosure relates generally to camera-based monitoring systems, and more particularly to methods and system for automatically configuring camera settings of such camera-based monitoring system.

Background

Camera-based monitoring systems are often used to monitor a monitoring region, and to identify certain objects and/or certain events that occur in the monitored region. In one example, a surveillance system often includes one or more cameras configured to monitor a surveilled region. The surveillance system may identify certain objects and/or certain events that occur in the surveilled region. In another example, a traffic monitoring system may monitor vehicle traffic along a roadway or the like. In some traffic monitoring systems, a License Plate Recognition (LPR) algorithm is used to processes images captured by one or more cameras of the traffic monitoring system to identify license plates of vehicles as they travel along the roadway.

In many camera-based monitoring systems, the quality of the images captured the cameras can be important to help identify certain objects and/or certain events in the monitored region. The quality of the images is often dependent upon the interplay between the camera settings, such as shutter speed, shutter aperture, focus, pan, tilt, and zoom, the conditions in the monitored region such as available light, and characteristics of the objects such as object type, object distance, object size and object speed. What would be desirable are methods and system for automatically configuring camera settings of a camera-based monitoring system to obtain higher quality images.

Summary

The present disclosure relates generally to camera-based monitoring systems, and more particularly to methods and system for automatically configuring camera settings of such camera-based monitoring system. In one example, an illustrative system may include a camera having a field of view, a radar sensor having a field of view that at least partially overlaps the field of view of the camera, and a controller operatively coupled to the camera and the radar sensor. In some cases, the controller is configured to receive one or more signals from the radar sensor, identify an object of interest moving toward the camera based at least in part on the one or more signals from the radar sensor, determine a speed of travel of the object of interest based at least in part on the one or more signals from the radar sensor, determine a projected track of the object of interest, and determine a projected image capture window within the field of view of the camera at which the object of interest is projected to arrive based at least in part on the determined speed of travel of the object of interest and the projected track of the object of interest. In some cases, the projected image capture window corresponds to less than all of the field of view of the camera.

In some cases, the controller sends one or more camera setting commands to the camera, including one or more camera setting commands that set one or more of: a shutter speed camera setting based at least in part on the speed of travel of the object of interest, a focus camera setting to focus the camera on the projected image capture window, a zoom camera setting to zoom the camera to the projected image capture window, a pan camera setting to pan the camera to the projected image capture window, and a tilt camera setting to tilt the camera to the projected image capture window. The controller may further send an image capture command to the camera to cause the camera to capture an image of the projected image capture window. In some cases, the controller may localize a region of the projected image capture window that corresponds to part or all of the object of interest (e.g. license plate of a car) and set one or more image encoder parameters for that localized region to a higher quality image. In some cases, the controller may change the encoder quantization value, which influences the degree of compression of an image or region of an image, thus affecting the quality of the image in the region.

Another example is found in a system that includes a camera having an operational range, a radar sensor having an operational range, wherein the operational range of the radar sensor is greater than the operational range of the camera, and a controller operatively coupled to the camera and the radar sensor. In some cases, the controller is configured to identify an object of interest within the operational range of the radar sensor using an output from the radar sensor, determine one or more motion parameters of the object of interest, set one or more camera settings for the camera based on the one or more motion parameters of the object of interest, and after setting the one or more camera settings for the camera, cause the camera to capture in an image of the object of interest.

Another example is found in a method for operating a camera that includes identifying an object of interest using a radar sensor, wherein the object of interest is represented as a point cloud, tracking a position of the object of interest, and determining a projected position of the object of interest, wherein the projected position is within a field of view of a camera. In some cases, the method further includes determining a projected image capture window that corresponds to less than all of the field of view of the camera, the projected image capture window corresponds to the projected position of the object of interest, setting one or more camera settings of the camera for capturing an image of the object of interest in the projected image capture window, and capturing an image of the object of interest when at least part of the object of interest is at the projected position and in the projected image capture window.

The preceding summary is provided to facilitate an understanding of some of the innovative features unique to the present disclosure and is not intended to be a full description. A full appreciation of the disclosure can be gained by taking the entire specification, claims, figures, and abstract as a whole.

Brief Description of the Figures

The disclosure may be more completely understood in consideration of the following description of various examples in connection with the accompanying drawings, in which:

Figure 1 is a schematic block diagram of an illustrative camera-based monitoring system;
Figure 2 is a schematic diagram illustrating a field of view of a camera and a field of view of a radar sensor;
Figures 3A-3C are flow diagrams showing an illustrative method;
Figure 4A is a schematic diagram illustrating a radar point cloud;
Figure 4B is a schematic diagram illustrating a Region of Interest (ROI) about a radar cluster;
Figure 4C is a schematic diagram illustrating a bounding box including a plurality of merged Regions of Interest (ROIs) of various detected objects;
Figure 4D is a schematic diagram illustrating an image from a camera with a bounding box projected onto the image;
Figure 5 is a flow diagram showing an illustrative method;
Figure 6 is a flow diagram showing an illustrative method; and
Figure 7 is a flow diagram showing an illustrative method.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

Description

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranged by endpoints includes all numbers subsumed within that range (e.g., 1 to 5 includes, 1, 1.5, 2, 2.75, 3, 3.8, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "illustrative embodiment", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

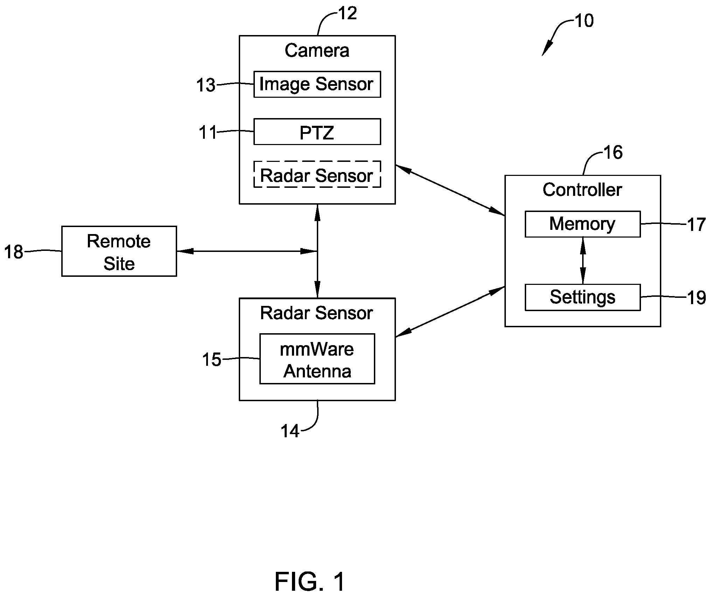

Figure 1 is a schematic block diagram of an illustrative camera-based monitoring system 10. The illustrative camera-based monitoring system 10, hereinafter referred to as system 10, may include a video or still camera 12. While one camera 12 is shown, it will be appreciated that in some cases the system 10 may have two cameras, three cameras, four cameras, six cameras, eight cameras, or any other suitable number of cameras 12, depending on the application. The camera 12 may include an image sensor 13, which may determine a Field of View (FOV) and an operational range, which together define at least in part the operational area that the camera 12 can be used to reliably detect and/or identifying objects of interest for the particular application at hand. The FOV of the camera 12 may define a horizontal FOV for the camera 12, and in some cases, a distance in which the camera 12 can reliably detect and/or identify objects of interest for the particular application at hand. In some cases, an operational range may separately define a distance in which the camera 12 can reliably detect and/or identifying objects of interest for the particular application at hand. The camera 12 may be configured to capture a video stream or a still image of the FOV. In some cases, the camera 12 may be a pan, tilt, zoom (PTZ) camera, as indicated by PTZ 11, but this is not required. For fixed cameras, the corresponding FOV is also fixed. For adjustable cameras, such as pan, tilt, zoom (PTZ) cameras, the corresponding FOV is adjustable.

It is contemplated that the camera 12 may have a network address, which identifies a specific addressable location for that camera 12 on a network. The network may be a wired network, and in some cases, the network may be a wireless network communicating using any of a variety of different wireless communication protocols.

The illustrative system 10 further includes a radar sensor 14. In some cases, the radar sensor 14 may be contained within the housing of the camera 12, as indicated by the dashed lines, but this is not required. In some cases, the radar sensor 14 is separate from the camera 12. The radar sensor 14 may include a millimeter wave (mmWave) antenna 15 that may determine a Field of View (FOV) and an operational range, which together define at least in part the operational area that the radar sensor 14 can be used to reliably detect and/or identifying objects of interest for the particular application at hand. The FOV of the radar sensor 14 may define a horizontal FOV for the radar sensor 14, and in some cases, may define a distance in which the radar sensor 14 may reliably detect and/or identify objects of interest for the particular application at hand. In some cases, the radar sensor 14 may be have an operational range of 100-250 meters for detecting vehicles along a roadway. In some cases, the radar sensor 14 may have an operational range of 200-250 meters, or an operational range of 100-180 meters, or an operational range of 100-150 meters. These are just examples. In some cases, as described herein, the FOV of the radar sensor 14 at least partially overlaps the FOV of the camera 12. In some cases, the operational range of the FOV of the radar sensor 14 is greater than the operational range of the FOV of the camera 12 for detecting and/or identifying objects when applied to a particular application at hand. In some cases, the FOV of the radar sensor 14 may include a horizontal FOV that corresponds generally to a horizontal FOV of the camera 12 FOV, but this is not required.

The radar sensor 14 may utilize a radio wave transmitted from the radar sensor 14 and receive a reflection from an object of interest within the FOV. The radar sensor 14 may be used to detect the object of interest, and may also detect an angular position and distance of the object of interest relative to the radar sensor 14. The radar sensor may also be used to detect a speed of travel for the object of interest. In some cases, the radar sensor 14 may be used to track the object of interest over time. Some example radar sensors may include Texas Instruments™ FMCW radar, imaging radar, light detection and ranging (Lidar), micro-doppler signature radar, or any other suitable radar sensors.

The illustrative system 10 of Figure 1 also includes a remote site 18 that may be operably coupled with the network (not shown). The camera 12 and the radar sensor 14 can communicate with the remote site 18 over the network. The remote site 18 may be, for example, a remote computer, a remote cloud-based server, a remote mobile device such as a mobile phone or tablet, or any other suable remote computing device. In some cases, the remote site 18 may include a display that can be used to display a video image so a human observer can view the image.

The illustrative system 10 of Figure 1 may include a controller 16. The controller 16 may be operatively coupled to the camera 12 and the radar sensor 14. The controller 16 may be configured to, for example, receive one or more signals from the radar sensor 14 and identify an object of interest, which may be moving toward the radar sensor and the camera 12. Based upon a signal received from the radar sensor 14, the controller 16 may identify one or more objects of interest in the FOV of the radar sensor. The controller 16 may also determine an angular position and distance of each of the identified objects of interest relative to the radar sensor 14, and a speed of travel of each of the identified objects of interest. The controller 16 may also determine one or more motion parameters of each of the identified objects of interest. The motion parameters may include, for example, a speed of travel of each of the identified objects of interest, a direction of travel of each of the identified objects of interest, a past track of each of the identified objects of interest, and/or a projected future track of each of the identified objects of interest. The controller 16 may in some cases determine a radar signature of each of the identified objects of interest. The radar signature may be based on, for example, radar signals that indicate parts of an object moving faster/slower than other parts of the same object (e.g. hands moving at different speeds from the body of a person, wheels moving/turning at different speeds than the body of the car), radar signals that indicate a reflectivity of all or parts of an object, radar signals that indicate the size of the object, and/or any other suitable characteristic of the radar signal. The radar signatures may be used to help classify objects into one or more object classifications. For example, the radar signatures may be used to help distinguish between a car and a truck, between a person and a car, between a person riding a bike and a car. Other radar and/or image parameters may be used in conjunction with the radar signatures to help classify the objects. For example, object speed may be used to help distinguish between a person walking and a car. These are just examples.

In some cases, the controller 16 may be configured to classify the objects of interest into one of a plurality of classifications. The plurality of classifications may include a vehicle (e.g., a car, a van, a truck, a semi-truck, a motorcycle, a moped, and the like), a bicycle, a person, or the like. In some cases, more than one object of interest may be identified. For example, two vehicles may be identified, or a bicycle and a vehicle may be identified, or a person walking on the side of a road and a vehicle may be identified. These are just examples.

In some cases, the controller 16 may be configured to determine a projected future position of the object of interest based, at least in part, on the projected track of the object of interest. The controller 16 may determine a projected image capture window within the FOV of the camera 12 at which the object of interest is projected to arrive based, at least in part, on the determined speed of travel of the object of interest and the projected track of the object of interest. The projected image capture window may correspond to less than all of the FOV of the camera 12, but this is not required.

The controller 16 may include a memory 17. In some cases, the memory 17 may be configured to store relative FOV information of the camera 12 relative to the FOV of the radar sensor 14. The controller 16 may further include one or more camera settings 19. The one or more camera settings 19 may include, for example, one or more of a shutter speed camera setting, an aperture camera setting, a focus camera setting, a zoom camera setting, a pan camera setting, and a tilt camera setting. The controller 16 may be configured to send one or more camera setting 19 commands to the camera 12, and after the camera settings 19 have been set for the camera 12, the controller 16 may send an image capture command to the camera 12 to cause the camera 12 to capture an image of the projected image capture window. In some cases, the controller 16 may be configured to cause the camera 12 to capture an image of the object of interest when the object of interest reaches the projected future position. In some cases, the controller 16 may further localize the object of interest or part of the object of interest (e.g. license plate), and may set image encoder parameters to achieve a higher-quality image for that region of the image. In some cases, the controller 16 may adjust an encoder quantization value, which may impact a degree of compression of the image or part of the image of the projected image capture window, thereby creating a higher-quality image, but this is not required. In some cases, in post-processing after the image is captured, the text/characters in the license plate can be improved through well-known image enhancement techniques, when desired.

In some cases, the camera settings 19 may be determined using one or more motion parameters of the detected objects of interest, one or more of the radar signatures of the detected objects of interest and/or one or more classifications of the detected objects of interest. For example, the camera settings 19 may be based, at least in part, on the speed of travel of an object of interest detected in the FOV of the camera 12. In some cases, the shutter speed camera setting may have a linear correlation with the speed of travel of the object of interest. For example, the faster the speed of travel, the faster the shutter speed, which creates a shorter exposure of the camera 12 thereby reducing blur in the resulting image. To help compensate for the shorter exposure, the aperture camera setting may be increased. In some cases, the aperture camera setting may be based, at least in part, on the shutter speed camera setting and ambient lighting conditions. For example, when the shutter speed camera setting is set to a faster speed, the aperture may be set to a wider aperture to allow more light to hit the image sensor within the camera 12. In some cases, adjust the aperture setting may be accomplished by adjusting an exposure level setting of image sensor of the camera 12, rather than changing a physical aperture size of the camera 12.

In some cases, the shutter speed camera setting and the aperture camera setting may be based, at least in part, on the time of day, the current weather conditions and/or current lighting conditions. For example, when there is more daylight (e.g., on a bright, sunny day at noon) the shutter speed may be faster and the aperture may be narrower than at a time of day with less light (e.g., at midnight when it is dark, or on a cloudy day). These are just examples.

In some cases, the controller 16 may be configured to set a focus camera setting to focus the camera 12 on the projected image capture window. In other cases, an autofocus feature of the camera 12 may be used to focus the camera on the object as the object reaches the projected image capture window. In some cases, the controller 16 may set a zoom camera setting to zoom the camera 12 to the projected image capture window. In some cases, the camera 12 may set a pan camera setting and the tilt camera setting to pan and tilt to the camera to capture the projected image capture window.

In some cases, the object of interest may be a vehicle traveling along a roadway, and the projected image capture window may include a license plate region of the vehicle when the vehicle reaches the projected image capture window. In this case, the controller 16 may send a camera setting command to the camera 12 to pan and tilt the camera 12 toward the projected image capture window before the vehicle reaches the projected image capture window, focus the camera 12 on the projected image capture window and zoom the camera 12 on the projected image capture window to enhance the image quality at or around the license plate of the vehicle. The controller 16 may send an image capture command to the camera 12 to capture an image of the license plate of the vehicle when the vehicle reaches the projected image capture window.

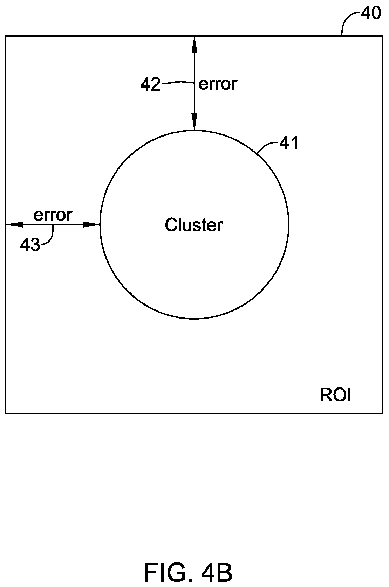

The controller 16 may be configured to initially identify an object of interest as a point cloud cluster from the signals received from the radar sensor 14. The position (e.g. an angular position and distance) of the object of interest may be determined from the point cloud cluster. The position of the object of interest may be expressed on a cartesian coordinate ground plane, wherein the position of the object of interest is viewed from an overhead perspective. The controller 16 may be configured to determine a bounding box for the object of interest based, at least in part, on the point cloud. In such cases, as shown in Figure 4B, the bounding box may be configured to include the point cloud cluster for the object of interest and may include a margin of error in both the X and Y axis to identify a Region of Interest (ROI). In some cases, the margin of error that is applied may be reduced the closer the object of interest gets to the camera 12. In some cases, when there are multiple objects of interest detected within the FOV of the camera 12 and the FOV of the radar sensor 14, a bounding box may be configured for each object of interest. The bounding boxes (or ROI) may be transformed from the cartesian coordinate ground plane to the image plane (e.g. pixels) of the camera 12 using a suitable transformation matrix. In some cases, the controller 16 may be configured to determine the projected image capture window based, at least in part, on the bounding box (or ROI) for the object of interest and the projected future track of the objects of interest.

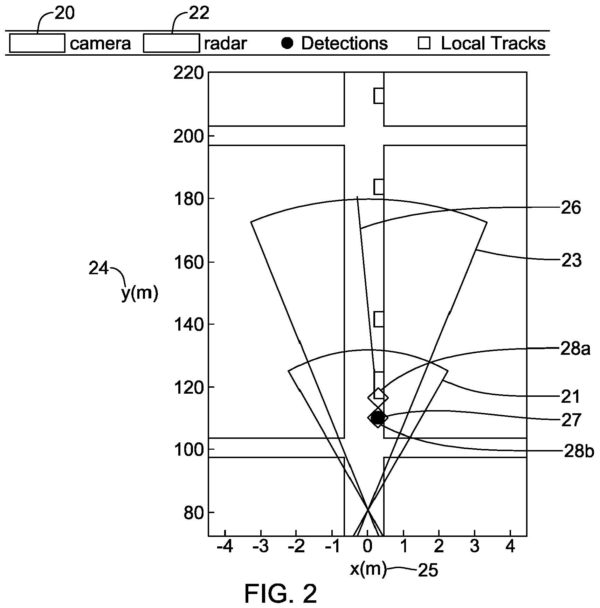

Figure 2 is a schematic diagram illustrating a field of view (FOV) 21 of a camera 20 (e.g., camera 12) and a field of view (FOV) 23 of a radar sensor 22 (e.g., radar sensor 14). As discussed with reference to Figure 1, the FOV 21 of the camera 20 and the FOV 23 of the radar sensor 22 may define at least in part what the camera 20 and the radar sensor 22 can see. In some cases, the FOV 23 of the radar sensor 22 at least partially overlaps the FOV 21 of the camera 20. In some cases, the FOV 23 of the radar sensor 22 is greater than the FOV 21 of the camera 20. In some cases, the FOV 23 of the radar sensor 22 may include a horizontal FOV that corresponds to a horizontal FOV of the camera 20 FOV 21. For example, as shown in Figure 2, the FOV 23 of the radar sensor 22 may extend to around 180 meters, as can be seen on the Y-axis 24. This may overlap with the FOV 21 of the camera 20 which may extend to around 130 meters. These are just examples and the FOV 23 of the radar sensor 22 may extend further than 180 meters.

As shown in the example in Figure 2, a camera 20 and a radar sensor 22 may be located at a position in real world coordinates that appear near the X-axis 25 of the diagram, and may detect an object of interest 27 as it approaches the camera 20 and the radar sensor 22. The radar sensor 22 may detect the object of interest 27 at around 180 meters and may determine a position and speed of the object of interest, which in this example is 120 kph (kilometers per hour). A controller (e.g., controller 16) may track the object of interest 27 based on signals from the radar sensor 22, as indicated by a track line 26, and based upon the speed of the object of interest 27, the controller may determine a projected future track 28a, 28b of the object of interest 27. The projected track(s) 28a, 28b may fall within the FOV 21 of the camera 20. Thus, when the object of interest 27 reaches the projected track(s) 28a, or 28b, the controller may instruct the camera 20 to capture an image of the object of interest 27.

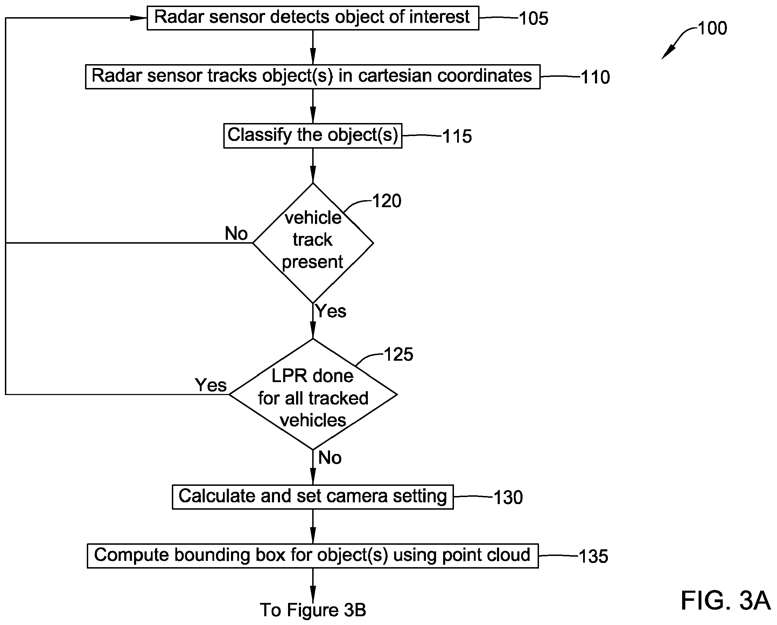

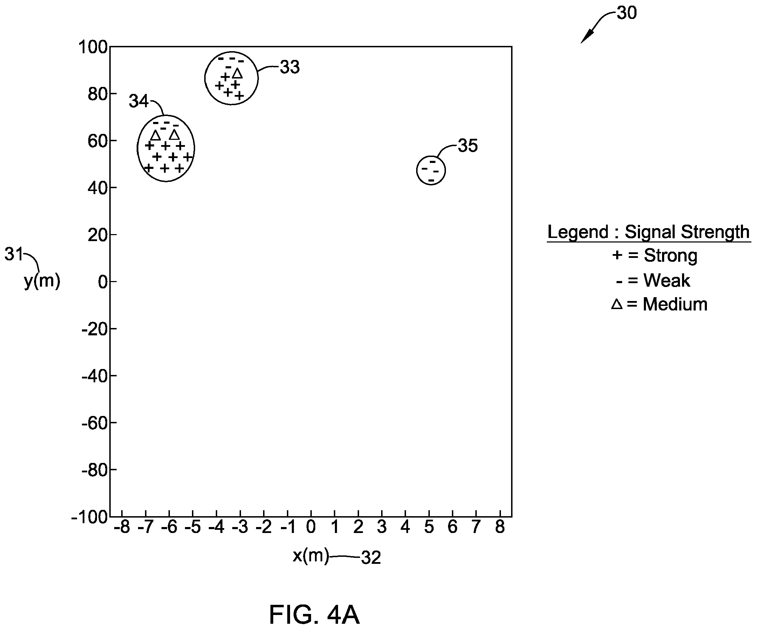

Figures 3A-3C are flow diagrams showing an illustrative method 100 of detecting and focusing on an object of interest, such as a moving vehicle. A radar sensor (e.g., radar sensor 14) may detect an object of interest as it approaches the radar sensor and a camera (e.g., camera 12). The radar sensor may detect the object of interest within a radar sensor operational range, as referenced by block 105. For example, the radar sensor may have an operational range of 100-250 meters. The radar sensor may track the object of interest, or a plurality of objects of interest, using a two-dimensional (2D) and/or a three-dimensional (3D) Cartesian coordinate ground plane, as referenced by block 110. The radar sensor may track the object(s) of interest frame by frame, and may represent the object(s) of interest using a point cloud cluster, as shown in Figure 4A. The point cloud cluster may be created using the Cartesian coordinate ground plane, and may be considered to be a "bird's eye" or "overhead" view of the object(s) of interest. In other words, in this example, the radar sensor creates a view of the object(s) of interest in a radar plane in a top-down manner.

In some cases, a controller (e.g., controller 16) may be operatively coupled to the radar sensor and may include software that is configured to classify the object(s) of interest, as referenced by block 115. For example, the controller may be configured to receive signals from the radar sensor indicating the presence of the object(s) of interest within the operational range of the radar sensor, and the controller may determine the strength of the signals received by the radar sensor, as well as a speed of travel of the object(s) of interest, and/or a size of the point cloud cluster. In some cases, the speed of travel may indicate the type of object(s) of interest. For example, a person walking or riding a bicycle may not be able to travel at speeds of 120 kph. Thus, this would indicate the object(s) of interest would likely be a moving vehicle. In some cases, the strength of the signal may indicate a type of material present within the object(s) of interest. For example, the radar sensor may receive a strong signal from a metal object, such as a vehicle. In some cases, an object such as an article of clothing on a person may produce a weaker signal. Thus, using the strength of the signal, the speed of travel, and the size of the point cloud cluster, the controller may classify the object(s) of interest. In one example, the track(s) may be classified into one of a vehicle, a bicycle, a person, or the like.

As referenced at block 120, if a vehicle is determined to be present, the controller determines if a license plate recognition (LPR) is desired for any of the vehicles currently being tracked. If LPR is desired for any of the vehicles currently being tracked, the controller determines if LPR has been performed on all vehicles being tracked, as referenced by block 125. In the example shown, if no license plate recognition (LPR) is desired for any of the vehicles currently being tracked, the method 100 does not proceed to block 130 but rather simply returns to block 105. If the controller determines that LPR is desired for at least one of the vehicles currently being tracked, the method moves on to block 130. In block 130, the controller calculates and sets the camera settings, as referenced by block 130.

As discussed with reference to Figure 1, the camera settings may include, for example, one or more of a shutter speed camera setting, an aperture camera setting, a focus camera setting, a zoom camera setting, a pan camera setting, and a tilt camera setting. These are just examples. The camera settings may be a function of the maximum speed of the fastest vehicle to be captured. For example, (shutter speed, aperture) = function (max(vehicle1_speed, vehicle2_speed, vehicle3_speed... etc.)) In other words, the shutter speed setting and the aperture setting may be calculated based upon the fastest tracked vehicle in order to capture clear images for the all of the multiple vehicles present in the image. Rather than having a pre-set function or matrix that sets the camera settings based on predetermined input values (e.g. speed, lighting, etc.), it is contemplated that the that the camera settings may be determined using a machine learning (ML) and/or artificial intelligence (AI) algorithm, as desired. These are just examples.

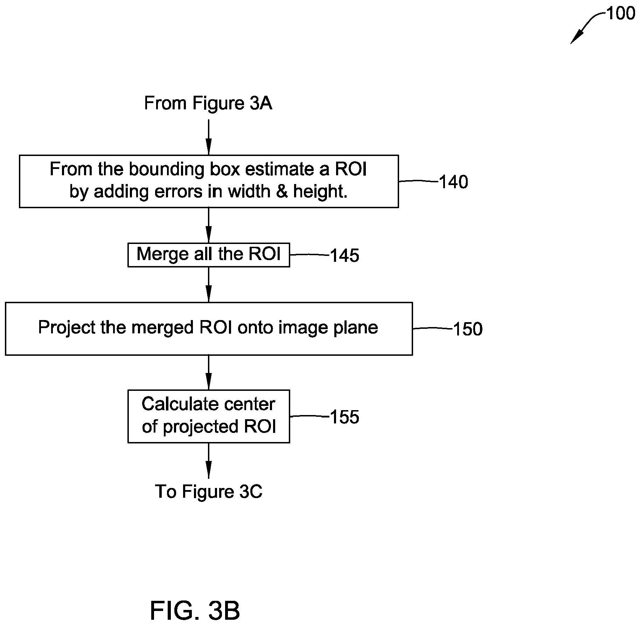

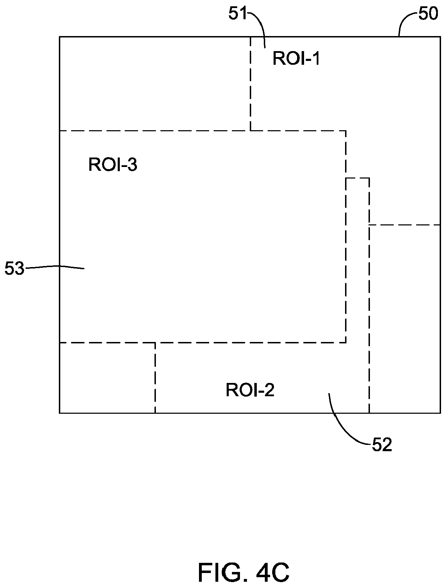

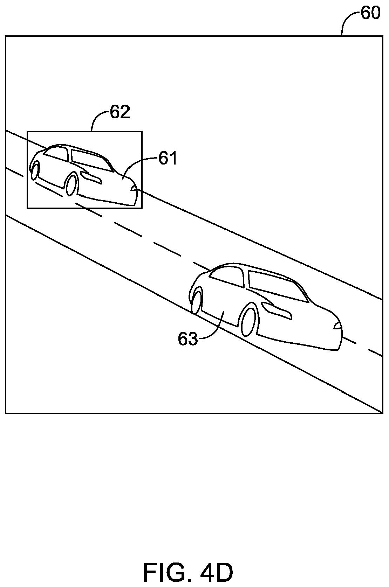

The controller may compute a bounding box for each vehicle being tracked using the point cloud cluster, as referenced by block 135. As shown in Figure 3B, based upon the bounding box, the controller may estimate a Region of Interest (ROI) by adding a margin of error in height and width to the bounding box, as referenced by block 140. In some cases, when the object(s) of interest are located farther away from the camera and radar sensor, the margin of error (and thus the ROI) may be larger. In some examples, the margin of error may include 1-2 meters. In some examples, the margin of error may include 0.5 meters, 0.25 meters, 0.01 meters, or any other suitable margin of error desired. When there are multiple objects of interest, there may be multiple corresponding ROIs. In such cases, the controller may merge the ROIs into one ROI, as referenced by block 145. An example of this is shown in Figure 4C. The coordinates in the radar plane (e.g., point cloud cluster) of the merged ROI are then projected onto an image captured by the camera in an image coordinate plane (e.g. pixels), as referenced by block 150. An example of this is shown in Figure 4D, where the merged ROI only includes one ROI of the vehicle 61. In this example of Figure 4D, an image of the other vehicle 63 has already been taken and is thus no longer being tracked. The resulting image may be called the projected ROI. The controller may calculate the center of the projected ROI, as referenced by block 155.

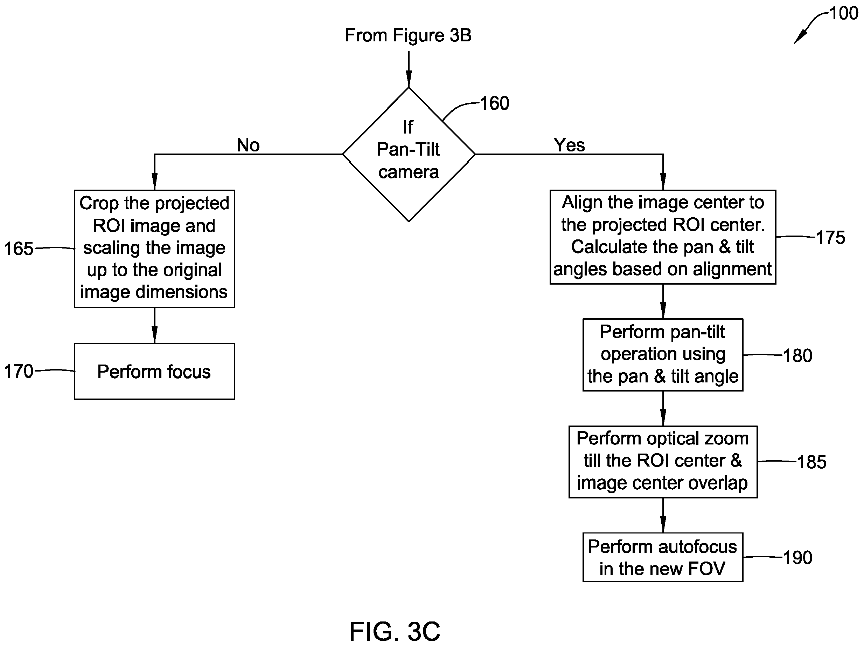

In Figure 3C, if the camera is a pan-tilt camera, as referenced by block 160, the controller may instruct the camera to align the center of the projected ROI with the image center, and based upon the alignment, the controller may calculate the pan camera setting and the tilt camera setting, as referenced by block 175. The controller may then send one or more commands to direct the camera to perform a pan-tilt operation using the calculated pan camera setting and the tilt camera setting, as referenced by block 180, and to further instruct the camera to perform a zoom setting until the center of the projected ROI and the image center overlap, as referenced by block 185. The controller may then direct the camera to perform a focus operation (or perform an autofocus) using a focus setting for the updated Field of View (FOV), as referenced by block 190.

In some cases, when the camera is not a pan-tilt camera, the projected ROI may be cropped and resized, such as by scaling the image up to an original image dimension, to fit the image captured by the camera, as referenced by bock 165, and perform a focus on the projected ROI, as referenced by block 170.

Figure 4A is a schematic diagram illustrating a plurality of radar point cloud clusters on a radar image 30. As can be seen in Figure 4A, the radar image 30 may include an X-axis 32 and a Y-axis 31, both of which indicate distance measured in meters (m). Shown in the example in 4A, the radar image 30 includes three point cloud clusters 33, 34, and 35, which may indicate the presence of a three objects of interest. As discussed with reference to Figure 3A, the point cloud clusters 33, 34, and 35 may be created using a Cartesian coordinate ground plane, and may be considered to be a "bird's eye" or "overhead" view of the object(s) of interest. The point cloud cluster 33 is located around 90 meters from a radar sensor (radar sensor 14), and includes varying signal strengths indicating the object of interest includes various materials and/or are traveling at varying speeds. For example, as shown in The Legend, the "+" indicates a strong signal, "-" indicates a weak signal, and "Δ" indicates a medium signal. As seen in the point cloud cluster 33, the image contains strong, weak, and medium strength signals. Further, the size of the point cloud cluster 33 would appear to be two meters in width, thus the indication may be that the object represented by the point cloud cluster 33 is a vehicle. Similarly, the point cloud cluster 34 includes strong, weak, and medium strength signals, and the size of the point cloud cluster 34 would appear to be two-three meters in width, thus indicating the object represented by the point cloud cluster 34 may be a larger vehicle. The point cloud cluster 35 includes a weak signal and would appear to be around 1 meter in width, thus indicating that the object represented by the point cloud cluster 35 may not be a vehicle, but rather may be a person on a bicycle, a person walking, or the like.

Figure 4B is a schematic diagram illustrating a Region of Interest (ROI) 40 including a radar cluster 41. As discussed with reference to Figure 3B, the controller (e.g., controller 16) may determine the size of the point cloud cluster and determine a bounding box for each object of interest, as shown in Figure 4B. As discussed with reference to Figure 3B, based upon the bounding box, a margin of error may be added to determine a ROI 40 for each of the objects. The controller may estimate the ROI 40 by adding a margin of error 42 in height and a margin of error 43 in width for the bounding box. In some cases, when the object(s) of interest are located farther away from the camera and radar sensor, the margin of error 42, 43 may be larger. In some cases, the margin of error 42, 43 may not be fixed, and may vary based upon a distance the object of interest is away from the camera and radar sensor. In some examples, the margin of error 42, 43 may include 1-2 meters. In some examples, the margin of error 42, 43 may include 0.5 meters, 0.25 meters, 0.01 meters, or any other suitable margin of error desired, particularly as the object of interest gets closer to the camera and radar sensor.

Figure 4C is a schematic diagram illustrating a ROI 50 including a plurality of merged Regions of Interest (ROIs) that correspond to a plurality of objects of interest. The merged ROIs include a Region of Interest (ROI)-1 51, a ROI-2 52, and a ROI-3 53. The ROIs 51, 52, and 53 each represent a ROI for an object of interest. In this example, there are three objects of interest. The ROIs 51, 52, and 53 define an area within a radar plane using Cartesian coordinates (e.g. Cartesian coordinate ground plane). The ROIs 51, 52, and 53 may overlap based on the coordinates of each object of interest as well as the margin of error discussed in reference to Figure 4B. The ROI 50 of the merged ROIs 51, 52, and 53 may then be projected onto an image captured by a camera (camera 12) by transforming the coordinates of the radar plane with the coordinates of an image plane. An example of the resulting image is shown in Figure 4D, but where the merged ROI only includes one ROI (e.g. of the vehicle 61).

Figure 4D is a schematic diagram illustrating an image 60 from a camera (e.g., camera 12) with a ROI 62 projected onto the image 60. The resulting image may be called the projected ROI. As shown in the image 60, the ROI 62 has encapsulated a vehicle 61 driving toward the camera. A controller (e.g., controller 16) may calculate the center of the projected ROI, and may instruct the camera to align the center of the projected ROI with the image 60 center, and based upon the alignment, the controller may calculate the pan camera setting and the tilt camera setting, when available. The controller may then direct the camera to perform a pan-tilt operation, and further instruct the camera to perform a zoom setting and a focus setting, producing an updated image (not shown). In some cases, a second vehicle 63 within the image 60 may no longer include a ROI, as the vehicle 63 has been previously identified using license plate recognition (LPR) and thus is no longer tracked by the system.

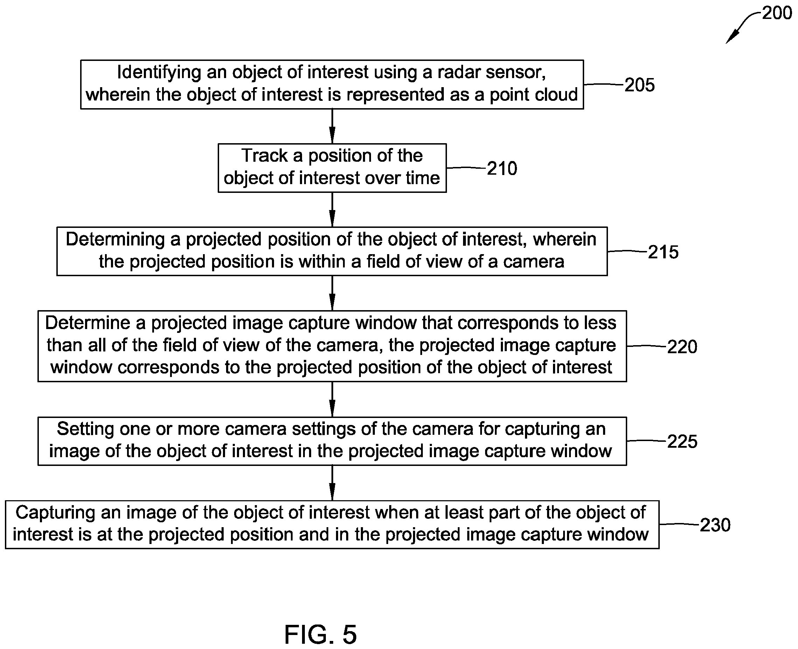

Figure 5 is a flow diagram showing an illustrative method 200 for operating a camera (e.g., camera 12), which may be carried out by a controller (e.g., controller 16), wherein the controller may be operatively coupled to the camera and a radar sensor (e.g., radar sensor 14). The controller may identify an object of interest using the radar sensor, and the object of interest may be represented as a point cloud, as referenced by block 205. In some cases, the object of interest may include a vehicle such as a car, a motorcycle, a semi-truck, a garbage truck, a van, or the like. The controller may track a position of the object of interest, as referenced by block 210. The controller may then determine a projected position of the object of interest, wherein the projected position may be within a Field of View (FOV) of the camera, as referenced by block 215. The controller may determine a projected image capture window that corresponds to less than all of the FOV of the camera, wherein the projected image capture window corresponds to the projected position of the object of interest, as referenced by block 220. In some cases, the projected image capture window may include a license plate of the vehicle.

The method 200 may further include the controller setting one or more camera settings of the camera for capturing an image of the object of interest in the projected image capture window, as referenced by block 225. The one or more camera settings may include one or more of a shutter speed camera setting, an aperture camera setting, a focus camera setting, and a zoom camera setting. In some cases, the one or more camera settings may include one or more of a pan camera setting and a tilt camera setting. The controller may capture an image of the object of interest when at least part of the object of interest is at the projected position and in the projected image capture window, as referenced by block 230.

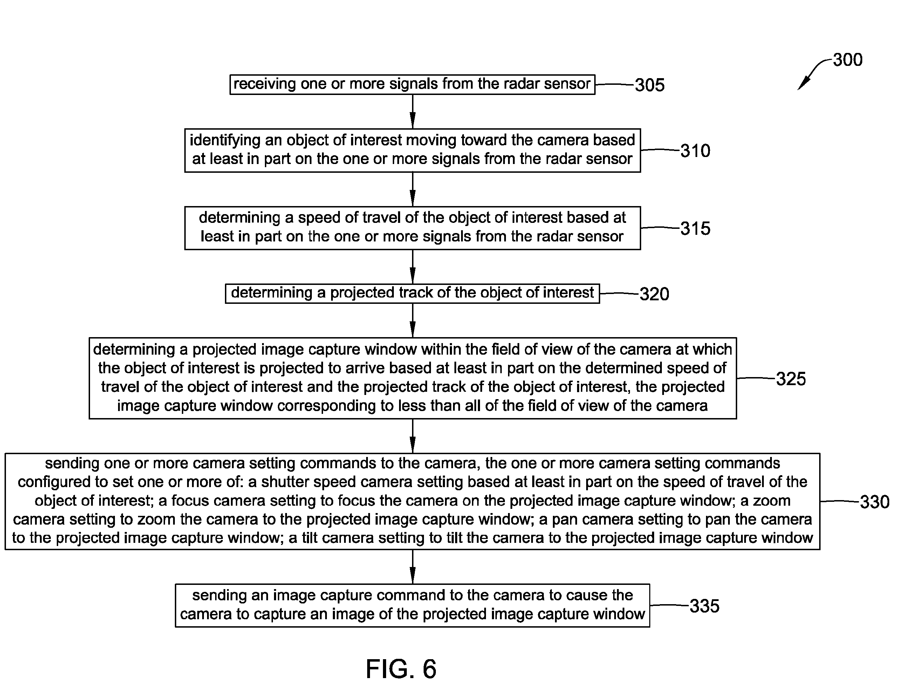

Figure 6 is a flow diagram showing an illustrative method 300 that may be carried out by a controller (e.g., controller 16). The method 300 may include the controller receiving one or more signals from a radar sensor (e.g., radar sensor 14), as referenced by block 305. The controller may identify an object of interest moving toward a camera (e.g., camera 12), based at least in part on the one or more signals received from the radar sensor, as referenced by block 310. The controller may be configured to determine a speed of travel of the object of interest based at least in part on the one or more signals from the radar sensor, as referenced by block 315, and may determine a projected track of the object of interest, as referenced by block 320. The method 300 may include determining a projected image capture window within a Field of View (FOV) of a camera (e.g., camera 12), at which the object of interest is projected to arrive based at least in part on the determined speed of travel of the object of interest, and the projected track of the object of interest. The projected image capture window may correspond to less than all of the FOV of the camera, as referenced by block 325.

The method 300 may further include the controller sending one or more camera setting commands to the camera. The one or more camera setting commands may be configured to set one or more of a shutter speed camera setting, wherein the shutter speed camera setting may be based at least in part on the speed of travel of the object of interest, a focus camera setting to focus the camera on the projected image capture window, a zoom camera setting to zoom the camera to the projected image capture window, a pan camera setting to pan the camera to the projected image capture window, and a tilt camera setting to tilt the camera to the projected image capture window, as referenced by block 330. The controller may then be configured to send an image capture command to the camera to cause the camera to capture an image of the projected image capture window, as referenced by block 335.

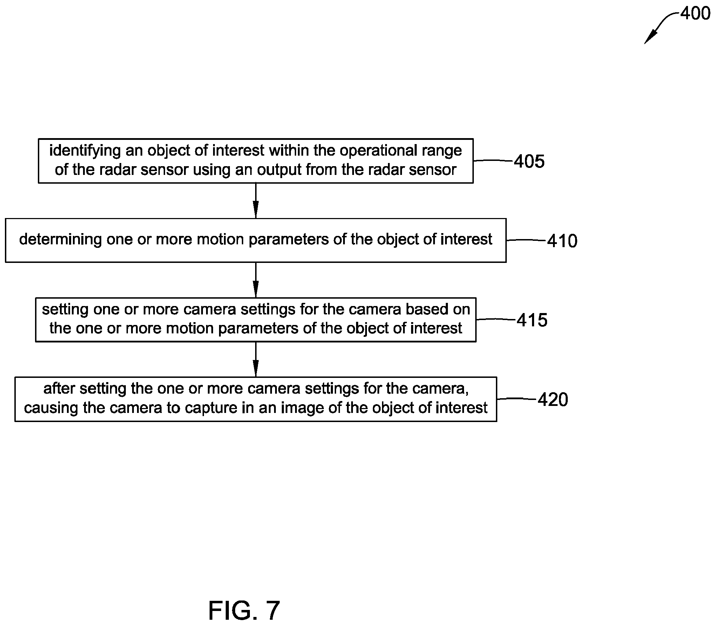

Figure 7 is a flow diagram showing an illustrative method 400 that may be carried out by a controller (e.g., controller 16). The controller may be operatively coupled to a camera (e.g., camera 12) and a radar sensor (e.g., radar sensor 14). The controller may be configured to identify an object of interest within an operational range of the radar sensor using an output from the radar sensor, as referenced by block 405. The controller may then determine one or more motion parameters of the object of interest, as referenced by block 410, and set one or more camera settings for the camera based on the one or more motion parameters of the object of interest, as referenced by block 415. After the controller sets the one or more camera settings for the camera, the controller may cause the camera to capture an image of the object of interest, as referenced by block 420.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

**Claims**

1. A method for controlling one or more components of a Building Management System (BMS) of a building in accordance with an estimated occupancy count of a space of the building, the method comprising:

    monitoring an occupancy count of the space of the building from each of a plurality of occupancy sensors;
    identifying an error parameter for each of the plurality of occupancy sensors, each error parameter representative of a difference between the occupancy count of the respective occupancy sensor and a ground truth occupancy count of the space, normalized over a period of time;
    determining an assigned weight for each of the plurality of occupancy sensors based at least in part on the respective error parameter;
    determining the estimated occupancy count of the space of the building based at least in part on:

       the occupancy count of each of the plurality of occupancy sensors;
       the assigned weight of each of the plurality of occupancy sensors; and

    controlling the BMS based at least in part on the estimated occupancy count.

2. The method of claim 1, wherein the error parameter for each of the plurality of occupancy sensors represents a normalized root mean square error (NRMSE) for the respective occupancy sensor.

3. The method of claim 2, wherein the NRMSE for each of the respective occupancy sensors is calculated in accordance with Equation (1):

$$nrmse_i = min\left(1, \frac{1}{\overline{Y_i}} \sqrt{\frac{1}{N}\sum\left(Y_i - Y_{ground\,truth}\right)^2}\right) \quad \text{Equation (1),}$$

where:

    $nrmse_i$ is the normalized root mean square error for the $i^{th}$ occupancy sensor;
    $\overline{Y_i}$ is the mean occupancy count reported by the $i^{th}$ occupancy sensor;
    N is the total number of data points of occupancy count;
    $Y_i$ is the occupancy count reported by the $i^{th}$ occupancy sensor; and
    $Y_{ground\,truth}$ is the ground truth occupancy count.

4. The method of claim 2, wherein the assigned weight (w) for each of the plurality of occupancy sensors is determined by subtracting the NRMSE for the respective occupancy sensor from one.

5. The method of claim 1, wherein the estimated occupancy count of the space of the building is a weighted average of the occupancy count from all of the plurality of occupancy sensors.

6. The method of claim 5, wherein the estimated occupancy count is calculated in accordance with Equation (2):

$$Effective\ Occupancy\ Count\ = \frac{\sum w_i * y_i}{\sum w_i} \quad \text{Equation (3)},$$

where $w_i$ is the weight assigned to the $i^{th}$ occupancy sensors, and is calculated in accordance with Equation (3):

$$w_i = (1 - nrmse_i) \quad \text{Equation (2)}.$$

7. The method of claim 1, wherein the period of time corresponds to a training period of time.

8. The method of claim 1, further comprising repeatedly updating the assigned weights for each of the plurality of occupancy sensors from time to time to accommodate a change in accuracy of one or more of the plurality of occupancy sensors.

9. The method of claim 1, wherein the ground truth occupancy count of the space is manually recorded by an operator.

10. The method of claim 1, wherein the ground truth occupancy count of the space is determined by performing video analytics on one or more video streams from one or more video cameras.

11. A system for controlling one or more components of a Building Management System (BMS) of a building in accordance with an estimated occupancy count of a space of the building, the system comprising:

   a plurality of occupancy sensors each for monitoring an occupancy count of the space of the building;
   a controller operatively coupled to the plurality of occupancy sensors, the controller configured to:

      identify an error parameter for each of the plurality of occupancy sensors, each error parameter representative of a difference between the occupancy count of the respective occupancy sensor and a ground truth occupancy count of the space, normalized over a period of time;
      determine an assigned weight for each of the plurality of occupancy sensors based at least in part on the respective error parameter;
      determine the estimated occupancy count of the space of the building based at least in part on:

         the occupancy count of each of the plurality of occupancy sensors;
         the assigned weight of each of the plurality of occupancy sensors; and

      control the BMS based at least in part on the estimated occupancy count.

12. The system of claim 11, wherein the error parameter for each of the plurality of occupancy sensors represents a normalized root mean square error (NRMSE) for the respective occupancy sensor.

13. The system of claim 12, wherein the NRMSE for each of the respective occupancy sensors is calculated in accordance with Equation (1):

$$nrmse_i = min\left(1, \frac{1}{\overline{Y}_i}\sqrt{\frac{1}{N}\sum\left(Y_i - Y_{ground\ truth}\right)^2}\right) \quad \text{Equation (1)},$$

where:

   $nrmse_i$ is the normalized root mean square error for the $i^{th}$ occupancy sensor;
   $\overline{Y}_i$ is the mean occupancy count reported by the $i^{th}$ occupancy sensor;
   N is the total number of data points of occupancy count;
   $Y_i$ is the occupancy count reported by the $i^{th}$ occupancy sensor; and
   $Y_{ground\ truth}$ is the ground truth occupancy count.

**14.** The system of claim 12, wherein the assigned weight (w) for each of the plurality of occupancy sensors is determined by subtracting the NRMSE for the respective occupancy sensor from one.

**15.** The system of claim 11, wherein the estimated occupancy count of the space of the building is a weighted average of the occupancy count from all of the plurality of occupancy sensors.

FIG. 1

EP 4 332 911 A1

**FIG. 2**

Legend: camera | radar | ● Detections | □ Local Tracks

EP 4 332 911 A1

Radar sensor detects object of interest ———105

100

Radar sensor tracks object(s) in cartesian coordinates ———110

Classify the object(s) ———115

No ← vehicle track present ———120

Yes

Yes ← LPR done for all tracked vehicles ———125

No

Calculate and set camera setting ———130

Compute bounding box for object(s) using point cloud ———135

To Figure 3B

FIG. 3A

From Figure 3A

From the bounding box estimate a ROI
by adding errors in width & height. ——140

Merge all the ROI ——145

Project the merged ROI onto image plane ——150

Calculate center
of projected ROI ——155

To Figure 3C

FIG. 3B

FIG. 3C

FIG. 4A

FIG. 4B

EP 4 332 911 A1

ROI-1

ROI-3

ROI-2

51

50

53

52

FIG. 4C

FIG. 4D

```
                                                                      ┌─200
                                                                     ↙

┌─────────────────────────────────────────────────────┐
│   Identifying an object of interest using a radar sensor,          │──205
│ wherein the object of interest is represented as a point cloud     │
└─────────────────────────────────────────────────────┘
                            │
                            ▼
              ┌──────────────────────────┐
              │    Track a position of the      │──210
              │  object of interest over time   │
              └──────────────────────────┘
                            │
                            ▼
┌─────────────────────────────────────────────────────┐
│ Determining a projected position of the object of interest, wherein │──215
│   the projected position is within a field of view of a camera      │
└─────────────────────────────────────────────────────┘
                            │
                            ▼
┌─────────────────────────────────────────────────────┐
│ Determine a projected image capture window that corresponds to less │
│ than all of the field of view of the camera, the projected image capture │──220
│ window corresponds to the projected position of the object of interest │
└─────────────────────────────────────────────────────┘
                            │
                            ▼
┌─────────────────────────────────────────────────────┐
│  Setting one or more camera settings of the camera for capturing an │──225
│   image of the object of interest in the projected image capture window │
└─────────────────────────────────────────────────────┘
                            │
                            ▼
┌─────────────────────────────────────────────────────┐
│ Capturing an image of the object of interest when at least part of the object of │──230
│ interest is at the projected position and in the projected image capture window │
└─────────────────────────────────────────────────────┘
```

FIG. 5

```
                                                                    ┌─300

┌────────────────────────────────────────────────┐
│ receiving one or more signals from the radar sensor │────305
└────────────────────────────────────────────────┘
                          │
                          ▼
┌────────────────────────────────────────────────┐
│ identifying an object of interest moving toward the camera based │────310
│ at least in part on the one or more signals from the radar sensor │
└────────────────────────────────────────────────┘
                          │
                          ▼
┌────────────────────────────────────────────────┐
│ determining a speed of travel of the object of interest based at │────315
│ least in part on the one or more signals from the radar sensor │
└────────────────────────────────────────────────┘
                          │
                          ▼
┌────────────────────────────────────────────────┐
│ determining a projected track of the object of interest │────320
└────────────────────────────────────────────────┘
                          │
                          ▼
┌──────────────────────────────────────────────────────────────────┐
│ determining a projected image capture window within the field of view of the camera at which │
│ the object of interest is projected to arrive based at least in part on the determined speed of │────325
│ travel of the object of interest and the projected track of the object of interest, the projected │
│ image capture window corresponding to less than all of the field of view of the camera │
└──────────────────────────────────────────────────────────────────┘
                          │
                          ▼
┌──────────────────────────────────────────────────────────────────┐
│ sending one or more camera setting commands to the camera, the one or more camera setting commands │
│ configured to set one or more of: a shutter speed camera setting based at least in part on the speed of travel of the │
│ object of interest; a focus camera setting to focus the camera on the projected image capture window; a zoom │────330
│ camera setting to zoom the camera to the projected image capture window; a pan camera setting to pan the camera │
│ to the projected image capture window; a tilt camera setting to tilt the camera to the projected image capture window │
└──────────────────────────────────────────────────────────────────┘
                          │
                          ▼
┌────────────────────────────────────────────────┐
│ sending an image capture command to the camera to cause the │────335
│ camera to capture an image of the projected image capture window │
└────────────────────────────────────────────────┘
```

FIG. 6

EP 4 332 911 A1

400

identifying an object of interest within the operational range
of the radar sensor using an output from the radar sensor — 405

determining one or more motion parameters of the object of interest — 410

setting one or more camera settings for the camera based on
the one or more motion parameters of the object of interest — 415

after setting the one or more camera settings for the camera,
causing the camera to capture in an image of the object of interest — 420

FIG. 7

Europäisches
Patentamt

European
Patent Office

Office européen
des brevets

**DECLARATION**

**Application Number**

which under Rule 63 of the European Patent Convention shall be considered, for the purposes of subsequent proceedings, as the European search report

EP 23 17 0916

| The Search Division considers that the present application, does not comply with the provisions of the EPC to such an extent that it is not possible to carry out a meaningful search into the state of the art on the basis of all claims | **CLASSIFICATION OF THE APPLICATION (IPC)** |
|---|---|
| Reason:<br><br>1) The claims filed do not have any support in the description (lack of support Art. 84 EPC).<br>2) The claims filed in response to the request for clarification CLAR cannot be used to establish the search report. From the legal opinion provided to the search division, it can be concluded that the applicant can no longer be invited to file corrected claims under R.56 (as was requested) and the claims filed on 31.10.2023 were received after the time limit to file such corrected claims on own motion. The only way to (theoretically) introduce the set of correct claims is by way of R.137 or R.139, which is only available at a later stage of the procedure (after search or even only by the examining division). Regarding the search to be performed, the claims filed on 31.10. 2023 cannot be considered.<br>3) Based on the CLAR reply, some pre-search documents were relevant wr.t. the problem of how to determine camera settings using Lidar/Radar detected ROI bounding boxes in order to determine camera-imaging settings/parameters for those ROI's for object detection/recognition. As far as non-optional features are explicitly defined in paragraphs [0004-0007] of the description (i.e. Summary of the invention – as indicated by the applicant in support of searchable subject-matter in as reply to the CLAR), any claim defining those features appears to lack novelty over the following documents:<br>D1 US 2021/025975 A1 (SEEBER RENE [DE] ET AL) 28 January 2021 (2021-01-28)<br>                                         -/-- | **INV.**<br>G06V20/54<br>G06V20/52 |

| Place of search | Date | Examiner |
|---|---|---|
| **The Hague** | **19 January 2024** | **Meurisse, Wim** |

EPO FORM 1504 (P04F37)

Europäisches
Patentamt

European
Patent Office

Office européen
des brevets

**DECLARATION**

Application Number

which under Rule 63 of the European Patent Convention
shall be considered, for the purposes of subsequent
proceedings, as the European search report

EP 23 17 0916

| The Search Division considers that the present application, does not comply with the provisions of the EPC to such an extent that it is not possible to carry out a meaningful search into the state of the art on the basis of all claims | **CLASSIFICATION OF THE APPLICATION (IPC)** |
|---|---|
| Reason:<br><br>D2 US 10 893 183 B1 (ZOU GUANGYU J [US] ET AL) 12 January 2021 (2021-01-12)<br>D3 US 2022/128701 A1 (ALGHANEM BASEL [US] ET AL) 28 April 2022 (2022-04-28)2/128701 A1 (ALGHANEM BASEL [US] ET AL) 28 April 2022 (2022-04-28)<br><br>The applicant's attention is drawn to the fact that a search may be carried out during examination following a declaration of no search under Rule 63 EPC, should the problems which led to the declaration being issued be overcome (see EPC Guideline C-IV, 7.2). | |

| Place of search | Date | Examiner |
|---|---|---|
| **The Hague** | **19 January 2024** | **Meurisse, Wim** |

EPO FORM 1504 (P04F37)